# EUROPÄISCHE PATENTANMELDUNG

(11) **EP 4 573 991 A1**
(43) Veröffentlichungstag der Anmeldung: **25.06.2025**
(21) Anmeldenummer: 24215335.1
(22) Anmeldetag: 26.11.2024
(51) Int. Cl.: A47J 31/46, A47J 31/60

(54) **FLUIDSYSTEM, GETRÄNKEZUBEREITUNGSVORRICHTUNG MIT FLUIDSYSTEM UND VERFAHREN ZUR FLUIDFÜHRUNG IN EINER GETRÄNKEZUBEREITUNGSVORRICHTUNG ZUR NUTZUNG DES DRAINAGEWASSERS IN EINER GETRÄNKEZUBEREITUNGSVORRICHTUNG**

(30) Priorität: 22.12.2023 DE 102023136608
(71) Anmelder: Eugster/Frismag AG, 8580 Amriswil (CH)
(72) Erfinder: van de Löcht, Hendrik, 8586 Riedt bei Erlen (CH); Riessbeck, Wolfgang, 8597 Landschlacht (CH)
(74) Vertreter: Patent- und Rechtsanwälte Behrmann Wagner PartG mbB

(57) **Zusammenfassung**

Die Erfindung betrifft ein Fluidsystem (01) für eine Getränkezubereitungsvorrichtung, insbesondere für einen Kaffeevollautomaten, zur Bereitstellung verschiedener Getränkevarianten, aufweisend eine Brühkammer (02) zum Aufbrühen und/oder Auslaugen eines Getränkesubstrats und ein damit fluidleitend verbundenes erstes schaltbares Ventil (05), welches entsprechend eines gewünschten Getränkebezugs die notwendigen Leitungsverbindungen zwischen einer Heißwasserbezugseinrichtung, der Brühkammer (01) und mindestens einem ersten Getränkeauslauf (06) herstellt und weiter aufweisend eine fluidleitend mit der Brühkammer (02) verbundene Drainagevorrichtung, beispielsweise ein Drainageventil, zum Entwässern der Brühkammer (02) nach dem Bezug des Getränks und einer, dem Drainageventil nachgeordneten und mit diesem fluidleitend verbundenen, Ableitung zur Führung des während der Entwässerung freiwerdenden, insbesondere aus der Brühkammer ausgeleiteten, Drainagewassers. Erfindungsgemäß ist vorgesehen, dass die Ableitung ein zweites schaltbares Ventil (08, 11) umfasst, mit dem das Drainagewasser auf wenigstens zwei unterschiedlichen Fluidpfaden im Fluidsystems gesammelt oder aus diesem ausgeleitet wird oder dass die Ableitung als direkte fluidleitende Verbindung von dem Drainageventil zu dem ersten Getränkeauslauf (06) ausgeführt ist, mit welcher das Drainagewasser direkt und kontinuierlich zu dem ersten Getränkeauslauf (06) geleitet und über diesen aus dem Fluidsystem ausgeleitet wird.

## Beschreibung

Die vorliegende Erfindung betrifft ein Fluidsystem für eine Getränkezubereitungsvorrichtung, insbesondere für eine Kaffeemaschine, bevorzugt für einen Kaffeevollautomaten. Weiterhin betrifft die Erfindung eine Getränkezubereitungsvorrichtung, insbesondere eine Kaffeemaschine, bevorzugt einen Kaffeevollautomaten umfassend ein solches Fluidsystem. Zudem betrifft die Erfindung ein Verfahren zur Fluidführung in einer Getränkezubereitungsvorrichtung.

Aus dem Stand der Technik sind Getränkezubereitungsvorrichtungen, insbesondere Kaffeemaschinen oder Kaffeevollautomaten bekannt, bei denen nach dem Getränkebezug, also nach dem Aufbrühen oder Auslaugen von Getränkesubstrat, beispielsweise von Kaffeepulver, dieses Getränkesubstrat in einer Brühkammer einer Kaffeemaschine verbleibt. Die in der Brühkammer zurückbleibende Mischung aus dem Getränk, Wasser und darin aufgeschwemmten Getränkesubstratpartikeln wird nachfolgend als Trester bezeichnet. Der Trester wird, beispielsweise bei Kaffeevollautomaten, aus der Brühkammer ausgebracht, bevorzugt ausgestoßen, und in einen dafür vorgesehenen Behälter ausgegeben und zur Entsorgung gesammelt und bereitgestellt.

Bevor der Trester ausgebracht, bevorzugt ausgestoßen, wird, sind im Stand der Technik bereits Lösungen bekannt, bei denen der Trester ausgepresst wird, so dass im Tresterbehälter möglichst wenig Restfeuchte im Trester enthalten ist. Das dient dazu, dass der Behälter kleiner dimensioniert werden kann und zu einer einfacheren Handhabung beim Entleeren des Behälters durch die Nutzer der Vorrichtung. Zusätzlich wird das Wachstum von Mikroorganismen und Schimmel gemindert, die in einem nass-warmen Trester gute Lebensbedingungen vorfinden würden, wenn der Trester Stunden oder Tage in dem Tresterbehälter gelagert wird. Bei Lösungen aus dem Stand der Technik wird regelmäßig beim Auspressen/Entfeuchten des Tresters in der Brühkammer nach dem Getränkebezug wird ein Drainageventil geöffnet und das austretende Drainagewasser über eine entsprechend ausgebildete Fluidleitung in eine in die Getränkezubereitungsvorrichtung integrierte Tropfschale abgeleitet, die zum Beispiel auch Spülfluid von einem Milchmodul und Spül- und/oder Reinigungsfluid aufnimmt und bevorratet, bevor ein Füllstandsmesser die Notwendigkeit der Entleerung der Tropfschale erkennt und die Getränkevorrichtung eine entsprechende Meldung an den Nutzer ausgibt und/oder bis auf Weiteres den Bezug weiterer Getränke unterbindet.

Das Verfahren mittels der bekannten Fluidsysteme von Getränkezubereitungsvorrichtungen birgt verschiedene Nachteile. So muss beispielsweise die Tropfschale regelmäßig entleert werden, was bei den üblichen Ausführungen der Tropfschale als eher flaches aber großflächiges Bauteil Umsicht des Nutzers bedarf, um kein darin gesammeltes Fluid zu verschütten und so die Umgebung der Maschine zu verschmutzen. Die Reinigung ist zwar seltener nötig als das Entleeren, aber mühsam, denn übliche Tropfschalen sind aufgrund des gegebenen Bauraums verwinkelt ausgeführt, so dass sich Verschmutzungen an verschiedenen Stellen besonders hartnäckig festsetzen können. Nicht zuletzt ist ein in die Tropfschale geleitetes Fluid grundsätzlich nachteilig, weil es die Notwendigkeit der Leerung und Reinigung der Tropfschale befördert. Weiter wird es als nachteilig angesehen, dass eine Menge Frischwasser nicht der Nutzung als Getränk zugeführt wird, sondern als Abwasser anfällt. Das Frischwasser wird also nicht effizient genutzt. Weiterhin ist die Energieeffizienz nachteilig, weil ein Anteil des energieintensiv erwärmten Frischwassers nicht als Getränk genutzt, sondern als Abwasser verworfen wird.

Vor diesem Hintergrund ist es die Aufgabe der Erfindung die Nachteile im Stand der Technik zu überwinden und insbesondere das Fluidsystem der Getränkezubereitungsvorrichtung so zu verbessern, dass eine Möglichkeit gegeben wird weniger Fluide oder Flüssigkeiten einer Tropfschale der Getränkezubereitungsvorrichtung zuzuleiten.

Diese Aufgabe wird mit einem Fluidsystem für eine Getränkezubereitungsvorrichtung mit den Merkmalen des Anspruchs 1 gelöst. Weiterhin wird die Aufgabe im Hinblick auf eine Getränkezubereitungsvorrichtung mit den Merkmalen des Anspruchs 5 und im Hinblick auf ein Verfahren zur Fluidführung in einer Getränkezubereitungsvorrichtung mit den Merkmalen des Anspruchs 6 gelöst.

Vorteilhafte Ausführungsformen des erfindungsgemäßen Fluidsystems für eine Getränkezubereitungsvorrichtung, der Getränkezubereitungsvorrichtung und des Verfahrens zur Fluidführung in einer Getränkezubereitungsvorrichtung sind Gegenstand der nachfolgenden Beschreibung und Figurenbeschreibung sowie der Unteransprüche.

Die vorrichtungsmäßig beschriebenen und beanspruchten Merkmale sollen auch als entsprechend verfahrensmäßig offenbart und beanspruchbar gelten, und umgekehrt.

Das Fluidsystem für eine Getränkezubereitungsvorrichtung, insbesondere für einen Kaffeevollautomaten, zur Bereitstellung verschiedener Getränkevarianten, umfasst eine Brühkammer zum Aufbrühen und/oder Auslaugen eines Getränkesubstrats, bevorzugt Kaffeebohnenmehl, ein mit der Brühkammer fluidleitend verbundenes erstes schaltbares Ventil, welches entsprechend eines gewünschten Getränkebezugs die notwendigen Leitungsverbindungen zwischen einer Heißwasserbezugseinrichtung, der Brühkammer und mindestens einem ersten Getränkeauslauf herstellt, eine fluidleitend mit der Brühkammer verbundene Drainagevorrichtung, beispielsweise ein Drainageventil, zum Entwässern der Brühkammer nach dem Bezug des Getränks und eine, dem Drainageventil nachgeordnete und mit diesem fluidleitend verbundene, Ableitung zur Führung des während der Entwässerung freiwerdenden, insbesondere aus der Brühkammer ausgeleiteten, Drainagewassers.

Erfindungsgemäß ist in einer ersten alternativen Ausführungsform vorgesehen, dass die Ableitung ein zweites schaltbares Ventil umfasst, mit dem das Drainagewasser auf wenigstens zwei unterschiedlichen Fluidpfaden im Fluidsystems gesammelt oder aus diesem ausgeleitet wird. Als Fluidpfad sind hier insbesondere Leitungsmittel zu verstehen, mittels denen Fluide in der Getränkezubereitungsvorrichtung geführt werden. In einer zweiten alternativen Ausführungsform der Erfindung ist die Ableitung als direkte fluidleitende Verbindung von dem Drainageventil zu dem ersten Getränkeauslauf ausgeführt, mit welcher das Drainagewasser direkt und kontinuierlich zu dem ersten Getränkeauslauf geleitet und über diesen aus dem Fluidsystem ausgeleitet wird. Die vorliegende Erfindung hat erkannt, dass im Fall von Getränkezubereitungsvorrichtungen wie beispielsweise Kaffeevollautomaten, das Drainagewasser, nichts anderes als eine Art des zubereiteten Getränks, insbesondere Kaffee, nämlich ein weniger starker Kaffee mit geringerer Temperatur ist und als solches also problemlos als Getränk für den menschlichen Konsum geeignet ist. Demnach kann das Drainagewasser mittels des zweiten schaltbaren Ventils nach Wahl des Benutzers selektiv genutzt oder verworfen werden. So wird die Möglichkeit gegeben die Menge an in der Tropfschale anfallenden Fluiden zu reduzieren und zusätzlich ein weiteres Getränk zu erzeugen. Das der Getränkezubereitungsvorrichtung zugeführte Fluid wird so zu einem größeren Anteil für den Konsum bereitgestellt. So wird insbesondere der Getränkezubereitungsvorrichtung zugeführtes Trinkwasser zu einem größeren Anteil für den Konsum bereitgestellt. Dabei wird auch die Energieeffizienz der Getränkezubereitungsvorrichtung gesteigert, weil ein größerer Anteil des energieintensiv erwärmten Fluides zum Konsum bereitgestellt wird und weniger davon in die Tropfschale gelangt und verworfen wird.

In der zweiten alternativen Ausführungsform der Erfindung wird das Drainagewasser mittels der direkten fluidleitenden Verbindung von dem Drainageventil zu dem ersten Getränkeauslauf kontinuierlich während des Vorgangs des Entwässerns der Brühkammer über den ersten Getränkeauslauf ausgegeben. Das Drainagewasser wird also als zusätzliches Getränk über den ersten Getränkeauslauf in das Getränkegefäß des Benutzers ausgegeben, so dass der Benutzer im Ergebnis also eine Mischung aus dem Getränk und dem Drainagewasser erhalten kann, wenn er den gesamten Auslauf aus dem ersten Getränkeauslauf in einem Gefäß auffängt. Falls der Benutzer der Getränkezubereitungsvorrichtung das nicht wünscht, kann die Tasse nach dem Ende des Getränkebezugs und vor dem Entwässern der Brühkammer entfernt oder getauscht werden. Das Drainagewasser wird dann über den Getränkeauslauf in die Tropfschale ausgegeben. Der Nutzer kann auch ein separates Gefäß nutzen, um das Drainagewasser aufzufangen. Diese alternative Ausführungsform nimmt wenig Bauraum ein und ist technisch einfacher zu realisieren, da weniger zusätzliche und/oder geänderte Komponenten in der Getränkezubereitungsvorrichtung erforderlich sind. Damit ist sie beispielsweise für die Anwendung in Getränkezubereitungsvorrichtungen, die nur wenig zusätzlichen Bauraum bieten und/oder die den finanziellen Mehraufwand für zusätzliche und/oder geänderte Technik nicht erlauben, vorteilhaft gegenüber der ersten alternativen Ausführungsform der Erfindung.

Besonders vorteilhaft kann vorgesehen sein, dass eine optische oder akustische Ausgabeeinrichtung, wie beispielsweise eine Anzeige, ein Lautsprecher oder dergleichen, das Ende des Getränkebezugs und/oder den Beginn der Drainagewasserausgabe über den ersten Getränkeauslauf einem Nutzer mitteilt oder übermittelt. So kann der Nutzer entscheiden, ob und wie das Drainagewasser aufgefangen und verwendet werden soll.

In einer ersten vorteilhaften Ausführungsform enden die wenigstens zwei Fluidpfade schaltbar und wählbar an wenigstens zwei der nachfolgenden Einrichtungen des Fluidsystems enden: Tropfschale, separater Sammelbehälter, erster Getränkeauslauf, zweiter Getränkeauslauf, kombinierter Auslauf für heißes Wasser und/oder Drainagewasser. Dabei kann es sich im Detail um eine in der Getränkezubereitungsvorrichtung integrierte Tropfschale, einen entweder in die Getränkezubereitungsvorrichtung integrierten oder an diese angeschlossenen, separaten Sammelbehälter, einen ersten Getränkeauslauf über den auch sonstige Getränke ausgegeben werden, einen zweiten Getränkeauslauf oder um einen Auslauf für heißes Wasser, der bei Getränkezubereitungsvorrichtungen vielfach vorhanden ist und der um die Möglichkeit zur Ausgabe des Drainagewassers ergänzt wird, handeln. Dadurch, dass das Drainagewasser nicht mehr nur zur Tropfschale geleitet werden kann, wird es ermöglicht das Drainagewasser als Getränk zu nutzen. Besonders einfach und ohne umfangreiche Änderungen des Fluidsystems ist es möglich den ersten Getränkeauslauf für die Ausgabe des Drainagewassers vorzusehen. Mehr Flexibilität für den Nutzer wird erreicht, wenn ein zweiter Getränkeauslauf für die Ausgabe des Drainagewassers vorgesehen wird. Damit ist es einfacher möglich das Drainagewasser in ein zweites Gefäß zu leiten, ohne dass das Gefäß unter dem ersten Getränkeauslauf gewechselt werden muss. Bei dem zweiten Getränkeauslauf kann es sich um einen kombinierten Auslauf für heißes Wasser und für das Drainagewasser handeln. Ein Auslauf für heißes Wasser ist bei Getränkezubereitungsvorrichtungen nach dem Oberbegriff vielfach schon vorgesehen, so dass sich die Änderungen am Fluidsystem, insbesondere an den nötigen Fluidleitungen, minimieren lassen. Neben der zusätzlichen Leitung von der Brühkammer zur Ventilbaugruppe kann die Nutzung des Drainagewassers durch eine geeignete Anpassung dieser Ventilbaugruppe ohne weitere zusätzliche Leitungen erreicht werden. Es ist auch möglich einen zweiten, also zusätzlichen und von dem ersten Getränkeauslauf und, sofern vorhanden, dem Auslauf für heißes Wasser separaten, Getränkeauslauf für das Drainagewasser vorzusehen.

Besonders vorteilhaft ist es einen separaten Sammelbehälter vorzusehen, in den das Drainagewasser geleitet wird und aus dem es auch zu einem späteren Zeitpunkt, der auch unabhängig vom Zeitpunkt des Bezugs des ersten Getränks ist, als Getränk ausgegeben werden kann. Bevorzugt ist der zusätzliche Sammelbehälter so ausgeführt, dass er einfach und schnell aus der Getränkevorrichtung entnommen oder von dieser abgenommen werden kann.

Durch die schaltbare und wählbare Führung des Drainagewassers kann dieses angepasst an verschiedene Wünsche der Nutzer der Getränkezubereitungsvorrichtung geführt und bereitgestellt werden, was die Getränkezubereitungsvorrichtung um neue Funktionen erweitert und so einen Mehrwert schafft. Dieser Mehrwert kann in einem oder mehreren der folgenden Beispiele liegen: Nutzung des Drainagewassers als neue Getränkevariante, kleineres Fluidvolumen zur Ableitung in die Tropfschale, so dass diese seltener entleert werden muss und/oder kleiner ausgeführt werden kann, geringere Verschmutzung der Tropfschale, so dass diese seltener und/oder mit geringerem Aufwand gereinigt werden kann, anteilig größere Nutzung des der Getränkezubereitungsvorrichtung zugeführten Frischwassers als konsumierbares Getränk.

Zur Anordnung des zweiten Ventils sind zwei alternative Ausführungsformen möglich, die sich erst entsprechend der Randbedingungen der Getränkezubereitungsvorrichtung gegeneinander bewerten lassen. Gemäß der ersten alternativen Ausführungsform sind das erste schaltbare Ventil und das zweite schaltbare Ventil in einer beide Ventile umfassenden Ventilbaugruppe zusammengefasst, mit der die wenigstens zwei Fluidpfade zur Führung des Drainagewassers aus der Brühkammer in schaltbarer und wählbarer Weise herstellbar sind. Auf diese Weise ist keine zusätzliche Ventilbaugruppe in der Getränkezubereitungsvorrichtung notwendig, was die Montage der Getränkezubereitungsvorrichtung vereinfacht, so dass sich die neue Variante leicht in die bestehenden Montageabläufe einfügen lässt. Weiterhin ist es auf diese Weise möglich das zusätzliche Ventil mit den schon vorhandenen Ventilsteuerungsmitteln anzusteuern und zu schalten. Auf diese Weise lässt sich das erfindungsgemäße Fluidsystem kostengünstig realisieren. Als Grundlage für die Ausführung in einer gemeinsamen Ventilbaugruppe kann beispielsweise ein Mehrwegeventil nach der Lehre der EP 3 855 054 B1 der Anmelderin genutzt werden.

In der zweiten alternativen Ausführungsform ist das zweite Ventil als vom ersten Ventil getrenntes Ventil ausgeführt, so dass mit diesen beiden getrennten Ventilen die wenigstens zwei Fluidpfade zur Führung des Drainagewassers aus der Brühkammer in schaltbarer und wählbarer Weise herstellbar sind. Auf diese Weise kann in anspruchsvollen Bauraumsituationen in einer Getränkezubereitungsvorrichtung das erfindungsgemäße Fluidsystem realisiert werden, beispielsweise nämlich dann, wenn es wegen des gegebenen Bauraums oder anderer Randbedingungen nicht möglich ist das zweite Ventil mit dem ersten Ventil in einer Ventilbaugruppe zusammenzufassen.

Ebenfalls wird die oben genannte Aufgabe der vorliegenden Erfindung durch eine Getränkezubereitungsvorrichtung, insbesondere durch einen Kaffeevollautomaten, beinhaltend ein Fluidsystem gemäß der vorangehenden Beschreibung und wenigstens eine der nachfolgenden Baugruppen wie Vorratsbehälter für Getränkesubstrat-Vorstufe oder Wasser, Mahlwerk zur Herstellung von Getränkesubstrat, Sammelbehälter für ausgelaugtes Getränkesubstrat, Bedien- und Anzeigeelemente, gelöst.

Die obige Aufgabe wird weiterhin auch durch ein Verfahren zum Betrieb eines Fluidsystems für eine Getränkezubereitungsvorrichtung gelöst. Erfindungsgemäß ist dabei vorgesehen in folgender Reihenfolge oder Abfolge von Verfahrensschritten vorzugehen:
Bereitstellen von Getränkesubstrat in einer Brühkammer, insbesondere in einer Brühkammer, und anschließender Bezug eines ersten Getränks durch Aufbrühen oder Auslaugen des Getränkesubstrats, insbesondere unter Bereitstellung von Heißwasser einer Heißwasserbezugseinrichtung. Nachdem das Getränk ausgegeben ist folgt das Entwässern der Brühkammer und dabei das Ableiten des während der Entwässerung freiwerdenden, insbesondere aus der Brühkammer ausgeleiteten, Drainagewassers, wobei das Drainagewasser nach dem Verlassen der Brühkammer, insbesondere nach dem Passieren eines Drainageventils schaltbar und auswählbar auf einem von wenigstens zwei Fluidpfaden geführt wird. In einer alternativen Ausführungsform des erfindungsgemäßen Verfahrens wird das Drainagewasser direkt und kontinuierlich zu dem ersten Getränkeauslauf geleitet, wobei eine direkte fluidleitende Verbindung von dem Drainageventil zu dem Getränkeauslauf vorgesehen ist und genutzt wird.

In einer ersten vorteilhaften Ausführungsform des Verfahrens wird das Drainagewasser auf einem der wenigstens zwei Fluidpfade schaltbar und wählbar an eine der wenigstens zwei der nachfolgenden Einrichtungen des Fluidsystems geführt: Tropfschale, separater Sammelbehälter, erster Getränkeauslauf, zweiter Getränkeauslauf, kombinierter Auslauf für heißes Wasser und/oder Drainagewasser. Durch diese Erweiterung des Verfahrens wird es den Nutzern in vorteilhafter Weise ermöglicht das Drainagewasser entsprechend ihrer individuellen Wünsche zu nutzen oder auch in herkömmlicher Weise in die Tropfschale abzuleiten.

In einer vorteilhaften Erweiterung des erfindungsgemäßen Verfahrens wird das Drainagewasser auf einem der schaltbaren und wählbaren Fluidpfade als ein weiteres Getränk nach dem Bezug des ersten Getränks über den ersten Getränkeauslauf oder über einen zweiten Getränkeauslauf oder über einen kombinierten Auslauf für heißes Wasser und/oder Drainagewasser ausgegeben. So wird es den Nutzern möglich gemacht das Drainagewasser als Getränk zu erhalten und zu konsumieren. Dazu kann das Drainagewasser beispielsweise zusätzlich zum ersten Getränk in dasselbe Gefäß ausgegeben werden, wobei es vorteilhaft ist, wenn es über den ersten Getränkeauslauf ausgegeben wird, so dass das Gefäß unter dem Auslauf für die Ausgabe des Drainagewassers zusätzlich zu und insbesondere nach dem Bezug des ersten Getränks nicht bewegt werden muss. Die Nutzung eines vom ersten Getränkeauslauf verschiedenen Getränkeauslaufs ist vorteilhaft, wenn das Drainagewasser als separates Getränk ausgegeben werden soll, da so das Gefäß unter dem ersten Auslauf nicht gewechselt werden muss, bevor das Drainagewasser ausgegeben werden kann. Dazu kann ein zusätzlicher zweiter Getränkeauslauf genutzt werden oder es kann der in vielen Bauformen einer dem Oberbegriff entsprechenden Getränkezubereitungsvorrichtung schon vorhandene Auslauf für heißes Wasser genutzt werden, so dass ein kombinierter Auslauf für heißes Wasser und/oder Drainagewasser geschaffen wird.

In einer weiteren vorteilhaften Erweiterung des erfindungsgemäßen Verfahrens wird das Drainagewasser auf einem der schaltbaren und wählbaren Fluidpfade in einen separaten, bevorzugt von der Getränkezubereitungsvorrichtung umfassten, Sammelbehälter geleitet. Vorteilhaft ist es auf diese Weise möglich das Drainagewasser für den späteren Konsum unabhängig vom Zeitpunkt des Bezugs des ersten Getränks bereitzustellen. Zusätzlich vorteilhaft ergibt sich dabei die Möglichkeit, dass ein aus mehreren Bezügen des ersten Getränks kumuliertes Volumen an Drainagewasser als ein Getränk ausgegeben werden kann, so dass die Nutzer der Getränkezubereitungsvorrichtung nicht auf ein festes und möglicherweise kleines Volumen des Drainagewassers als zusätzliches Getränk beschränkt sind. Der separate Sammelbehälter kann beispielsweise in das Gehäuse der Getränkezubereitungsvorrichtung integriert oder außen an diese angeschlossen sein, wobei der separate Sammelbehälter bevorzugt einfach und schnell aus der Getränkezubereitungsvorrichtung zu entnehmen oder von dieser abzunehmen ist. So wird es ermöglicht den Sammelbehälter auf einfache Weise manuell zu entleeren, wahlweise zum Konsum oder zum Entsorgen des gesammelten Drainagewassers und weiterhin ist er in dieser Art leicht für eine Reinigung zugänglich.

In einer weiteren vorteilhaften Erweiterung des erfindungsgemäßen Verfahrens wird das Drainagewasser auf einem der schaltbaren und wählbaren Fluidpfade aus dem Sammelbehälter über den ersten Getränkeauslauf oder über einen zweiten Getränkeauslauf oder über einen kombinierten Auslauf für heißes Wasser und/oder Drainagewasser ausgegeben. So kann es auf einem besonders komfortablen Weg für den Nutzer zum Konsum bereitgestellt werden. In Bezug auf die Wahl des Getränkeauslaufs gelten die obigen Ausführungen.

In einer weiteren vorteilhaften Erweiterung des erfindungsgemäßen Verfahrens wird das Drainagewasser gemischt mit zusätzlichem, bevorzugt heißem, Wasser ausgegeben. Auf diese Weise kann eine weitere Getränkevariation bereitgestellt werden. Handelt es sich bei dem erfindungsgemäßen Verfahren um die Bereitstellung von Kaffee, so kann das mit heißem Wasser gemischt ausgegebene Drainagewasser als sogenannter "Caffè Americano" angesehen werden und erfüllt den Nutzerwunsch nach einem, im Vergleich zum Espresso oder anderen herkömmlichen Kaffeevarianten, leichteren Kaffeegetränk.

Weitere Vorteile, Merkmale und Einzelheiten der Erfindung werden nachfolgend beispielhaft anhand der schematischen Zeichnungen beschrieben. Diese zeigen in:
- Figur 1:: einen Ausschnitt einer schematischen Darstellung eines Fluidsystems einer Getränkezubereitungsvorrichtung gemäß des Stands der Technik,
- Figur 2:: einen Ausschnitt einer schematischen Darstellung eines erfindungsgemäßen Fluidsystems einer Getränkezubereitungsvorrichtung in einer ersten Ausführungsform,
- Figur 3:: einen Ausschnitt einer schematischen Darstellung eines erfindungsgemäßen Fluidsystems einer Getränkezubereitungsvorrichtung in einer weiteren Ausführungsform,
- Figur 4:: einen Ausschnitt einer schematischen Darstellung eines erfindungsgemäßen Fluidsystems einer Getränkezubereitungsvorrichtung in einer weiteren Ausführungsform,
- Figur 5:: einen Ausschnitt einer schematischen Darstellung eines erfindungsgemäßen Fluidsystems einer Getränkezubereitungsvorrichtung in einer weiteren Ausführungsform,
- Figur 6:: einen Ausschnitt einer schematischen Darstellung eines erfindungsgemäßen Fluidsystems einer Getränkezubereitungsvorrichtung in einer weiteren Ausführungsform,
- Figur 7:: eine alternative Ausführungsform der Erfindung mit einer direkten fluidleitenden Verbindung vom Drainageventil zum ersten Getränkeauslauf,
- Figur 8:: eine schematische Darstellung eines erfindungsgemäßen Verfahrens zur Fluidführung in einer Getränkezubereitungsvorrichtung.

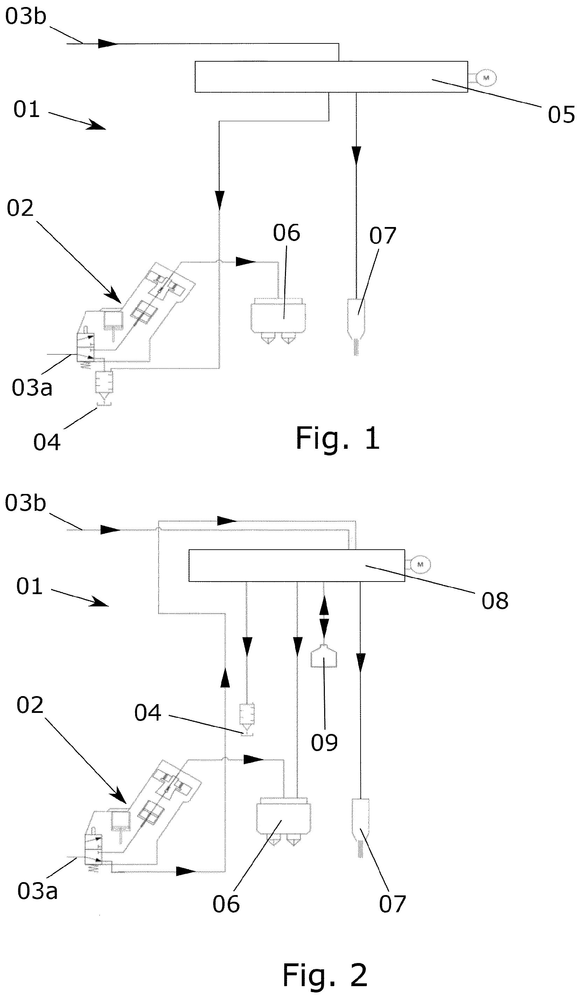

Die Figur 1 zeigt einen Ausschnitt eines Fluidsystems 01 einer Getränkezubereitungsvorrichtung, wie es im Stand der Technik bekannt ist. Es ist ein Ausschnitt eines Fluidsystem eines Kaffeevollautomaten dargestellt. In der Brühkammer 02 wird Kaffeepulver mittels heißem Wasser aus der Zuleitung 03 a aufgebrüht. Der aufgebrühte Kaffee tritt aus der Brühkammer 02 aus und wird zum ersten Getränkeauslauf 06 geführt. Nach dem Brühvorgang wird der Trester entwässert und das dabei freiwerdende Drainagewasser über den Drainageablauf der Brühkammer 02 direkt und ohne Auswahlmöglichkeit in die Tropfschale 04 abgeführt. Mittels der Ventilbaugruppe nach dem Stand der Technik 05 ist es außerdem möglich heißes Wasser von der Zuleitung 03 b zum Wasserauslauf 07 zu führen, so dass für den Anwender der Bezug von heißem Wasser, beispielsweise zur Zubereitung von Tee, ermöglicht wird. Das Fluidsystem 01 kann noch weitere Bestandteile, wie beispielsweise einen Milchschäumer umfassen.

Die Figur 2 zeigt eine erste Ausführungsform eines erfindungsgemäßen Fluidsystems einer Getränkezubereitungsvorrichtung, wobei das erfindungsgemäße zweite Ventil in einer gemeinsamen erfindungsgemäßen Ventilbaugruppe 08 mit dem ersten Ventil zusammengefasst ist. Die erfindungsgemäße Ventilbaugruppe 08 kann dabei eine Variante nach der Bauart der Ventilbaugruppe nach dem Stand der Technik 05 sein. In vorteilhafter Weise nutzt diese Ausführungsform also schon vorhandene Baugruppen zur Darstellung der erfindungsgemäßen zusätzlichen Funktionalität. Es kann dabei insbesondere ein gemeinsames Stellglied, beispielsweise in Form eines elektrischen Servomotors, für die Ansteuerung der Ventilbaugruppe genutzt werden. Über eine zusätzliche Fluidleitung ist der Drainageablauf der Brühkammer 02 fluidleitend mit der erfindungsgemäßen Ventilbaugruppe 08 verbunden. Das Drainagewasser kann über die erfindungsgemäße Ventilbaugruppe 08 nach dem Brühvorgang in schaltbarer und wählbarer Weise auf wenigstens zwei unterschiedlichen Fluidpfaden im Fluidsystem gesammelt oder aus diesem ausgeleitet werden. Bei der dargestellten bevorzugten Ausführungsform kann das Drainagewasser mittels der erfindungsgemäßen Ventilbaugruppe 08 zur Tropfschale 04, zum ersten Getränkeauslauf 06 oder zu einem zusätzlichen Sammelbehälter 09 geführt werden. Die erfindungsgemäße Ventilbaugruppe 08 kann vorteilhaft so ausgeführt sein, dass das Drainagewasser aus dem Sammelbehälter 09 entnommen und zum ersten Getränkeauslauf 06 geführt werden kann. Weiterhin kann es mittels einer geeigneten Ausführung der erfindungsgemäßen Ventilbaugruppe 08 und einer entsprechenden Ansteuerung der Zuleitung für heißes Wasser 03 b möglich sein das Drainagewasser gemischt mit heißem Wasser auszugeben.

Weiterhin können optional vorhandene weitere Bestandteile des Fluidsystems 01 in jeder Ausführungsform der Erfindung unverändert vorgesehen sein.

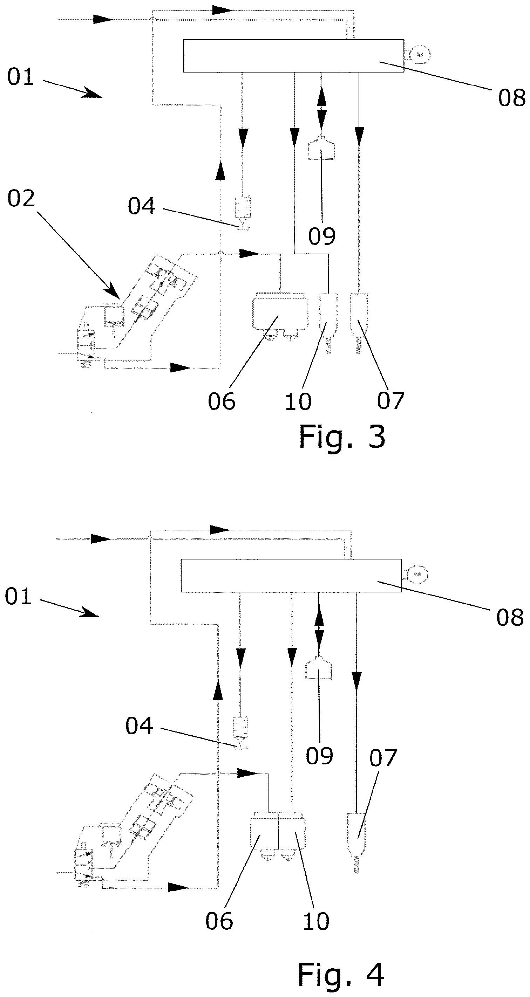

Die Figur 3 zeigt eine nächste Ausführungsform eines erfindungsgemäßen Fluidsystems einer Getränkezubereitungsvorrichtung. Das erfindungsgemäße zweite Ventil ist in einer gemeinsamen erfindungsgemäßen Ventilbaugruppe 08 mit dem ersten Ventil zusammengefasst. Im Unterschied zur Ausführungsform, welche in der Figur 2 gezeigt ist, erfolgt die Ausgabe des Drainagewassers über einen zweiten Getränkeauslauf 10. Der zweite Getränkeauslauf 10 ist in der dargestellten Ausführungsform als ein separater und baulich vom ersten Getränkeauslauf 06 getrennter Getränkeauslauf realisiert.

Die Figur 4 zeigt eine weitere Ausführungsform eines erfindungsgemäßen Fluidsystems einer Getränkezubereitungsvorrichtung. Das erfindungsgemäße zweite Ventil ist in einer gemeinsamen erfindungsgemäßen Ventilbaugruppe 08 mit dem ersten Ventil zusammengefasst. Im Unterschied zur Ausführungsform, welche in der Figur 3 gezeigt ist, erfolgt die Ausgabe des Drainagewassers über einen zweiten Getränkeauslauf 10, welcher zu einer Einheit mit dem ersten Getränkeauslauf 06 zusammengefasst ist.

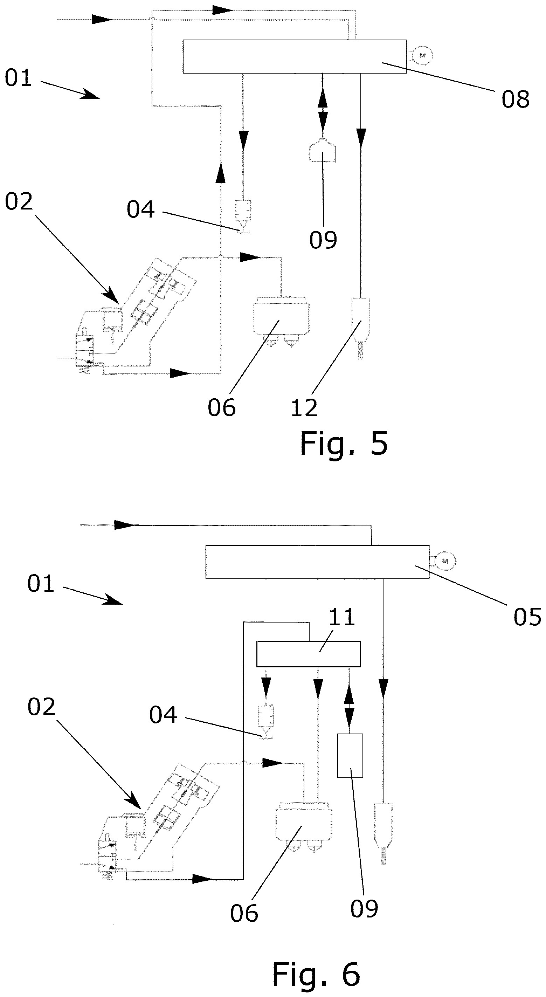

Die Figur 5 zeigt eine nächste Ausführungsform eines erfindungsgemäßen Fluidsystems einer Getränkezubereitungsvorrichtung. Durch eine geeignete Ausführung der erfindungsgemäßen Ventilbaugruppe 08 ist es möglich das Drainagewasser über den Auslauf für heißes Wasser auszugeben und so einen kombinierten Auslauf für Drainagewasser und/oder für heißes Wasser 12 zu schaffen. Ein Auslauf für heißes Wasser ist im Stand der Technik verbreitet vorgesehen, so dass nur geringe Änderungen des Fluidsystems, insbesondere der Fluidleitungen, notwendig werden, um diesen Auslauf als kombinierten Auslauf für heißes Wasser und/oder für Drainagewasser zu nutzen.

Die Figur 6 zeigt eine weitere Ausführungsform eines erfindungsgemäßen Fluidsystems einer Getränkezubereitungsvorrichtung. Das erfindungsgemäße zweite Ventil ist als eine separate und von der ersten Ventilbaugruppe nach dem Stand der Technik 05 getrennte zweite Ventilbaugruppe 11 realisiert. Durch diese Auftrennung wird es möglich die Ventile und die zur fluidleitenden Verbindung der Bestandteile des Fluidsystems notwendigen Leitungen frei im vorgegebenen Bauraum anzuordnen, was sich insbesondere in anspruchsvollen Bauraumsituationen vorteilhaft auswirken kann. Die Ausgestaltung des Auslaufs für das Drainagewasser ist dabei frei wählbar, es kann also jede der vorstehend gezeigten Varianten realisiert werden.

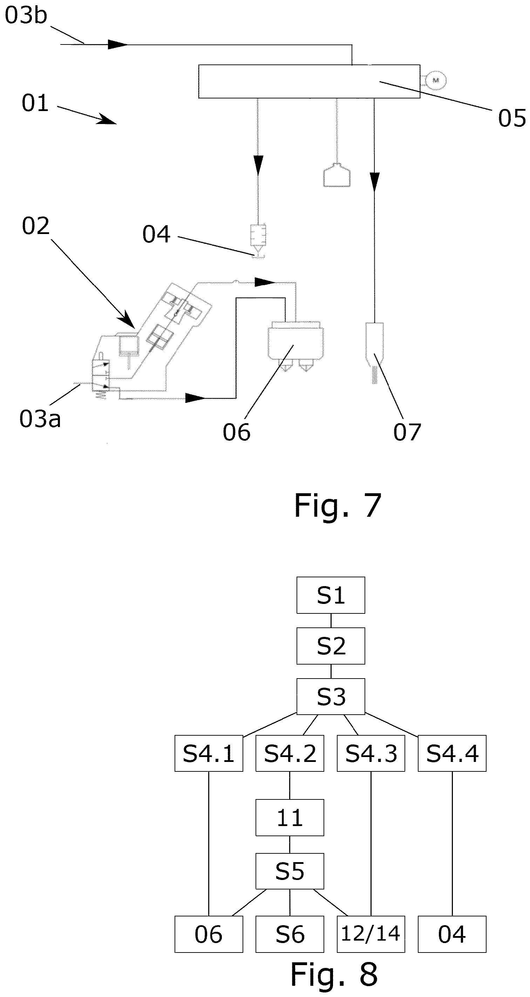

Die Figur 7 zeigt eine alternative Ausführungsform der Erfindung, wobei die Ableitung für das Drainagewasser als direkte fluidleitende Verbindung von dem Drainageventil zu dem ersten Getränkeauslauf ausgeführt, mit welcher das Drainagewasser direkt und kontinuierlich zu dem ersten Getränkeauslauf geleitet und über diesen ausgegeben wird. Anhand des dargestellten Hydraulikschemas ist klar zu erkennen, dass deutlich weniger zusätzliche Leitungen und sonstige zusätzliche Technik notwendig ist. Daher nimmt diese alternative Ausführungsform wenig Bauraum ein und ist technisch einfacher zu realisieren.

Die Figur 8 stellt ein erfindungsgemäßes Verfahren zur Fluidführung in einer Getränkezubereitungsvorrichtung mittels eines erfindungsgemäßen Fluidsystems mit einem zusätzlichen schaltbaren Ventil in Form eines Ablaufdiagramms dar. Im ersten Verfahrensschritt S1 wird Getränkesubstrat in einer Brühkammer bereitgestellt. Ist die Getränkezubereitungsvorrichtung ein Kaffeevollautomat, dann werden in diesem Verfahrensschritt beispielsweise Kaffeebohnen vermahlen und in die Brühkammer überführt. Im zweiten Verfahrensschritt S2 wird das Getränk durch Aufbrühen oder Auslaugen des Getränkesubstrats, insbesondere unter Bereitstellung von Heißwasser einer Heißwasserbezugseinrichtung, hergestellt. Das Getränk wird beispielsweise direkt aus der Brühkammer über den ersten Getränkeauslauf ausgegeben. Im dritten Verfahrensschritt wird die Brühkammer entwässert, so dass das Getränkesubstrat möglichst wenig Feuchtigkeit enthält, bevor es zum Entsorgen aus der Brühkammer ausgegeben wird. Erfindungsgemäß wird es im vierten Verfahrensschritt S4 beim Ableiten des während der Entwässerung freiwerdenden, insbesondere aus der Brühkammer ausgeleiteten, Drainagewassers ermöglicht das Drainagewasser nach dem Verlassen der Brühkammer, insbesondere nach dem Passieren eines Drainageventils, schaltbar und wählbar auf verschiedenen Fluidpfaden zu führen.

Der Verfahrensschritt S4 kann im dargestellten Beispiel für das Verfahren als einer der vier alternativen Verfahrensschritte S4.1 bis S4.4 ausgeführt werden. Der Verfahrensschritt S4.1 ermöglicht es das Drainagewasser direkt über den ersten Getränkeauslauf 06 auszugeben. Der Verfahrensschritt S4.2 ermöglicht es das Drainagewasser in einen zusätzlichen Sammelbehälter 09 zu führen. Der Verfahrensschritt S4.3 ermöglicht es das Drainagewasser über einen zweiten Getränkeauslauf 10 oder über einen kombinierten Getränkeauslauf für heißes Wasser und Drainagewasser 12 auszugeben. Mit dem Verfahrensschritt S4.4 ist es weiterhin möglich das Drainagewasser in die Tropfschale 4 abzuführen und das Ergebnis zu erzielen, wie es auch im Stand der Technik üblich ist. Aus dem Sammelbehälter 09 ist es möglich das Drainagewasser im Verfahrensschritt S5 abzuführen und über den ersten Getränkeauslauf 06 oder über den zweiten Getränkeauslauf 10 oder über einen kombinierten Getränkeauslauf für heißes Wasser und Drainagewasser 12 dem Nutzer bereitzustellen. Ebenfalls kann es möglich sein den Sammelbehälter 09 mittels des Verfahrensschrittes S6 zu entleeren. Dazu kann es bevorzugt möglich sein den Sammelbehälter in einfacher Art und Weise aus der Getränkezubereitungsvorrichtung zu entnehmen. Nicht jede Realisierung des erfindungsgemäßen Verfahrens muss dabei die oben angeführten vier Varianten des Verfahrensschritts S4 als wählbare Alternativen anbieten, beispielsweise kann es möglich sein entweder den Verfahrensschritt S4.1 oder den Verfahrensschritt S4.3 anzubieten. Weiterhin muss der Verfahrensschritt S4.2 nicht in jedem Fall realisiert sein. Es wird deutlich, dass das erfindungsgemäße Verfahren in einer Vielzahl verschiedener Ausführungsformen an Anforderungen, beispielsweise der Nutzer, angepasst realisiert werden kann.

### Bezugszeichenliste

- 01: Fluidsystem
- 02: Brühkammer
- 03: Zuleitung für heißes Wasser und/oder Dampf
- 04: Tropfschale
- 05: Ventilbaugruppe nach dem Stand der Technik
- 06: erster Getränkeauslauf
- 07: Auslauf für heißes Wasser
- 08: erfindungsgemäße Ventilbaugruppe
- 09: Sammelbehälter
- 10: zweiter Getränkeauslauf
- 11: Ventilbaugruppe
- 12: kombinierter Getränkeauslauf für heißes Wasser und/oder Drainagewasser
- S1: erster Verfahrensschritt
- S2: zweiter Verfahrensschritt
- S3: dritter Verfahrensschritt
- S4.1: vierter Verfahrensschritt in erster Alternative
- S4.2: vierter Verfahrensschritt in zweiter Alternative
- S4.3: vierter Verfahrensschritt in dritter Alternative
- S4.4: vierter Verfahrensschritt in vierter Alternative
- S5: fünfter Verfahrensschritt
- S6: sechster Verfahrensschritt

## Patentansprüche

1. Fluidsystem (01) für eine Getränkezubereitungsvorrichtung, insbesondere für einen Kaffeevollautomaten, zur Bereitstellung verschiedener Getränkevarianten, aufweisend eine Brühkammer (02) zum Aufbrühen und/oder Auslaugen eines Getränkesubstrats und ein damit fluidleitend verbundenes erstes schaltbares Ventil (05), welches entsprechend eines gewünschten Getränkebezugs die notwendigen Leitungsverbindungen zwischen einer Heißwasserbezugseinrichtung, der Brühkammer (01) und mindestens einem ersten Getränkeauslauf (06) herstellt und weiter aufweisend eine fluidleitend mit der Brühkammer (02) verbundene Drainagevorrichtung, beispielsweise ein Drainageventil, zum Entwässern der Brühkammer (02) nach dem Bezug des Getränks und einer, dem Drainageventil nachgeordneten und mit diesem fluidleitend verbundenen, Ableitung zur Führung des während der Entwässerung freiwerdenden, insbesondere aus der Brühkammer ausgeleiteten, Drainagewassers,
**dadurch gekennzeichnet, dass**
die Ableitung ein zweites schaltbares Ventil (08, 11) umfasst, mit dem das Drainagewasser auf wenigstens zwei unterschiedlichen Fluidpfaden im Fluidsystems gesammelt oder aus diesem ausgeleitet wird oder dass die Ableitung als direkte fluidleitende Verbindung von dem Drainageventil zu dem ersten Getränkeauslauf (06) ausgeführt ist, mit welcher das Drainagewasser direkt und kontinuierlich zu dem ersten Getränkeauslauf (06) geleitet und über diesen aus dem Fluidsystem ausgeleitet wird.

2. Fluidsystem nach Anspruch 1,
**dadurch gekennzeichnet,**
**dass** die wenigstens zwei Fluidpfade schaltbar und wählbar an wenigstens zwei der nachfolgenden Einrichtungen des Fluidsystems enden: Tropfschale (04), separater Sammelbehälter (09), erster Getränkeauslauf (06), zweiter Getränkeauslauf (10), kombinierter Auslauf für heißes Wasser und/oder Drainagewasser (12).

3. Fluidsystem nach Anspruch 1 oder 2,
**gekennzeichnet durch**
eine das erste schaltbare Ventil und das zweite schaltbare Ventil umfassende Ventilbaugruppe (08), mit der die wenigstens zwei Fluidpfade zur Führung des Drainagewassers aus der Brühkammer (02) in schaltbarer und wählbarer Weise herstellbar sind.

4. Fluidsystem nach Anspruch 1 oder 2,
**dadurch gekennzeichnet,**
**dass** das zweite Ventil (11) als vom ersten Ventil (05) getrenntes Ventil ausgeführt ist, so dass mit diesen beiden getrennten Ventilen die wenigstens zwei Fluidpfade zur Führung des Drainagewassers aus der Brühkammer (02) in schaltbarer und wählbarer Weise herstellbar sind.

5. Getränkezubereitungsvorrichtung, insbesondere ein Kaffeevollautomat, beinhaltend ein Fluidsystem (01) nach einem oder mehreren der vorgenannten Ansprüche und wenigstens eine der nachfolgenden Baugruppen wie Vorratsbehälter für Getränkesubstrat und Wasser, Mahlwerk für Getränkesubstrat, Sammelbehälter für ausgelaugtes Getränkesubstrat, Bedien- und Anzeigeelemente.

6. Verfahren zur Fluidführung in einer Getränkezubereitungsvorrichtung, insbesondere mittels eines Fluidsystems (01) nach einem der Ansprüche 1 bis 4, umfassend die folgenden Verfahrensschritte:
- Bereitstellen von Getränkesubstrat in einer Brühkammer (02);
- Bezug eines ersten Getränks durch Aufbrühen oder Auslaugen des Getränkesubstrats, insbesondere unter Bereitstellung von Heißwasser einer Heißwasserbezugseinrichtung;
- Entwässern der Brühkammer (02) nach dem Bezug;
- Ableiten des während der Entwässerung freiwerdenden, insbesondere aus der Brühkammer (02) ausgeleiteten, Drainagewassers, **dadurch gekennzeichnet, dass** das Drainagewasser nach dem Verlassen der Brühkammer (02), insbesondere nach dem Passieren eines Drainageventils, auswählbar auf einem von wenigstens zwei Fluidpfaden geführt wird oder direkt und kontinuierlich zu dem ersten Getränkeauslauf (06) geleitet wird, wobei eine direkte fluidleitende Verbindung von dem Drainageventil zu dem Getränkeauslauf (06) genutzt wird.

7. Verfahren nach Anspruch 6,
**dadurch gekennzeichnet,**
**dass** das Drainagewasser auf einem der wenigstens zwei Fluidpfade schaltbar und wählbar an eine der wenigstens zwei der nachfolgenden Einrichtungen des Fluidsystems geführt wird: Tropfschale (04), separater Sammelbehälter (09), erster Getränkeauslauf (06), zweiter Getränkeauslauf (10), kombinierter Auslauf für heißes Wasser und/oder Drainagewasser (12).

8. Verfahren nach Anspruch 6 oder 7,
**dadurch gekennzeichnet,**
**dass** das Drainagewasser auf einem der wählbaren Fluidpfade als ein weiteres Getränk nach dem Bezug des ersten Getränks über den ersten Getränkeauslauf (06) oder über einen zweiten Getränkeauslauf (10) oder über einen kombinierten Auslauf für heißes Wasser und/oder Drainagewasser (12) ausgegeben wird.

9. Verfahren nach Anspruch 6 oder 7,
**dadurch gekennzeichnet,**
**dass**, das Drainagewasser auf einem der wählbaren Fluidpfade in einen separaten, bevorzugt von der Getränkezubereitungsvorrichtung umfassten, Sammelbehälter (09) geleitet wird.

10. Verfahren nach Anspruch 9,
**dadurch gekennzeichnet,**
**dass**, das Drainagewasser auf einem der schaltbaren und wählbaren Fluidpfade aus dem Sammelbehälter (09) über den ersten Getränkeauslauf (06) oder über einen zweiten Getränkeauslauf (10) oder über einen kombinierten Auslauf für heißes Wasser und/oder Drainagewasser (12) ausgegeben wird.

11. Verfahren nach Anspruch 8 oder 10,
**dadurch gekennzeichnet,**
**dass** das Drainagewasser gemischt mit zusätzlichem, bevorzugt heißem, Wasser ausgegeben wird.
